# EUROPÄISCHE PATENTSCHRIFT

(11) **EP 4 210 980 B1**
(45) Veröffentlichungstag und Bekanntmachung des Hinweises auf die Patenterteilung: **03.07.2024**
(21) Anmeldenummer: 21755735.4
(22) Anmeldetag: 04.08.2021
(51) Int. Cl.: B60K 1/00, B60K 11/02, H02K 7/00, H02K 5/20

(54) **ELEKTRISCHE ANTRIEBSEINHEIT UND EIN FAHRZEUG MIT EINER ENTSPRECHENDEN ELEKTRISCHEN ANTRIEBSEINHEIT**
ELECTRIC PROPULSION UNIT AND VEHICLE WITH SUCH AN ELECTRIC PROPULSION UNIT
ENSEMBLE D'ENTRAÎNEMENT ÉLECTRIQUE ET VÉHICULE AVEC UN TEL ENSEMBLE D'ENTRAÎNEMENT ÉLECTRIQUE

(30) Priorität: 11.09.2020 DE 102020211432
(43) Veröffentlichungstag der Anmeldung: 19.07.2023
(73) Patentinhaber: Robert Bosch GmbH, 70442 Stuttgart (DE)
(72) Erfinder: BOETTINGER, Theresa Sophia, 70180 Stuttgart (DE); ROEHNER, Marc Oliver, 69124 Heidelberg (DE); BREINLINGER, Philipp, 76137 Karlsruhe (DE)
(86) Internationale Anmeldenummer: PCT/EP2021/071719
(87) Internationale Veröffentlichungsnummer: WO 2022/053232

(56) Entgegenhaltungen:
- EP-A1- 3 028 888
- WO-A1-2019/240522
- WO-A1-2020/069744
- WO-A2-2014/026874

## Beschreibung

### Stand der Technik

Die Erfindung betrifft eine elektrische Antriebseinheit, insbesondere für ein Fahrzeug oder Kraftfahrzeug, nach dem Oberbegriff des Anspruchs 1 sowie ein Fahrzeug mit einer solchen elektrischen Antriebseinheit.

Ein elektrischer Achsantrieb (eAchse) besteht im Wesentlichen aus Leistungselektronik, einer elektrischen Maschine und einem Getriebe. Neben der elektrischen Maschine erzeugt auch das Getriebe während des Betriebs Wärme, die ab einer gewissen Dauerleistung abgeführt werden muss.

Konventionell wird die Wärme im Getriebe mit einem Wärmetauscher abgeführt. Wenn die elektrische Maschine mit Wasser gekühlt wird, ist das Öl im Getriebe nicht zwingend an einen Wärmetauscher gekoppelt.

DE 10 2014 214 724 A1 offenbart eine elektrische Maschine mit einem Kühlmantel, bestehend aus einer Innenschale und einer Außenschale, wobei zwischen diesen Schalen ein als Ringspalt ausgebildeter Kühlraum angeordnet ist. Die Innenschale und die Außenschale werden zur Montage ineinander geschoben, wobei der Ringspalt an seinen axialen Enden durch Klebeverbindungen abgedichtet ist.

Ein nächstkommender Stand der Technik ist aus der WO 2020/069744 A1 bekannt.

### Offenbarung der Erfindung

Das der Erfindung zugrunde liegende Problem wird durch eine elektrische Antriebseinheit, insbesondere für ein Fahrzeug oder Kraftfahrzeug, mit den Merkmalen des Anspruchs 1 und ein Fahrzeug, insbesondere ein Kraftfahrzeug, mit den Merkmalen des Anspruchs 10 gelöst. Vorteilhafte Weiterbildungen der Erfindung sind in den Unteransprüchen genannt.

Erfindungsgemäß wird eine elektrische Antriebseinheit, insbesondere für ein Fahrzeug oder Kraftfahrzeug, mit einer elektrischen Maschine und einem Getriebe vorgeschlagen. Dabei ist die elektrische Maschine in einem Antriebsgehäuse untergebracht und das Getriebe ist in einem Getriebegehäuse untergebracht. Antriebsgehäuse und Getriebegehäuse können einstückig, oder als separate Elemente ausgebildet sein. Ein Innenraum des Antriebsgehäuses und ein Innenraum des Getriebegehäuses sind durch eine Lagerwand voneinander getrennt. Am oder im (bspw. innerhalb des) Antriebsgehäuse(s) ist mindestens ein Kühlkanal (bspw. in Form eines Kühlmantels) zur Kühlung der elektrischen Maschine ausgebildet. Die elektrische Antriebseinheit weist einen Einleger auf, der derart ausgestaltet und angeordnet ist, dass im Antriebsgehäuse zwischen der Lagerwand und dem Einleger ein Hohlraum entsteht, wobei der Hohlraum fluidisch mit dem Kühlkanal verbunden ist.

Mit "fluidisch verbunden" ist eine Verbindung zweier Elemente (bzw Räume) gemeint, über die ein Fluid (Gas, Flüssigkeit) von einem Element (bzw. Raum) in das andere und umgekehrt fließen kann.

Damit wird der durch den Einleger gebildete Hohlraum Teil des Kühlkreislaufs bzw. zu einem weiteren Kühlkanal, der die Lagerwand kühlt. Damit lässt sich eine Kühlung des Getriebes über das Getriebegehäuse bzw. die Lagerwand realisieren.

Der Einleger kann in das Gehäuse eingelegt/eingepresst werden.

Antriebsgehäuse und Getriebegehäuse können als Gehäuseabschnitte ausgebildet sein, die im zusammengesetzten Zustand eine Gehäusebaugruppe oder ein Gehäuse ausbilden. Auch eine einstückige Ausgestaltung des Gehäuses ist denkbar.

Die Lagerwand kann in einem dem Getriebegehäuse zugewandten Endbereich des Antriebsgehäuses ausgebildet sein (Antriebsgehäuse weist eine Lagerwand auf). Die Lagerwand kann einen Lagersitz für ein Wälzlager (bspw. zur Lagerung der Motorwelle) enthalten, optional auch einen Dichtsitz für einen Dichtring, bspw. einen Radialwellendichtring. Die Lagerwand ist insbesondere radial orientiert (Lagerwand orthogonal zur Mittellängsachse der elektrischen Maschine bzw. von deren Motorwelle angeordnet).

Der Einleger kann im Antriebsgehäuse radial angeordnet sein, bspw. als eine radial orientierte Einlegescheibe.

Die elektrische Antriebseinheit kann als elektrische Antriebseinheit für ein Fahrzeug oder Kraftfahrzeug dienen, bspw. in Form einer elektrischen Achse ("E-Achse"). Auch eine Anwendung im Maschinenbau ist denkbar, bspw. als Antriebseinheit für eine Werkzeugmaschine.

Gemäß einer Weiterbildung kann der Einleger derart ausgebildet sein, dass der Hohlraum sich über die gesamte dem Antriebsgehäuse zugewandte Fläche der Lagerwand erstreckt. Somit kann die gesamte Lagerwand gekühlt werden. Die Kühlung der Lagerwand bzw. des Getriebegehäuses bzw. des Getriebes kann optimiert werden. Lediglich der Bereich des Lagersitzes und/oder Dichtsitzes kann freigelassen werden. Der Hohlraum kann bspw. kreisringförmig ausgebildet sein.

Gemäß einer Weiterbildung kann der Hohlraum mit dem Kühlkanal mittels mindestens eines Kanals fluidisch verbunden sein. Der Kanal kann bspw. mittels zweier, sich kreuzender Durchgänge gebildet werden. Jeweils ein Ende eines Durchgangs kann mittels eines Dichtstopfens fluidisch dichtend versiegelt/verschlossen sein. Somit ist keine (zusätzliche) Verschlauchung nötig. Die Durchgänge können mittels Bohren/Fräsen hergestellt werden.

Selbstverständlich ist es ebenso denkbar, die fluidische Verbindung zwischen Hohlraum und dem Kühlkanal mittels einer (zusätzlichen) Verschlauchung zu realisieren, die ebenso einen fluidischen Kanal darstellt und insbesondere außerhalb des Antriebsgehäuses angeordnet ist. Dabei kann der Kanal zwei (sich nicht kreuzende) Durchgänge aufweisen, wobei einer der Durchgänge von außen in den Kühlkanal mündet und der zweite Durchgang von außen in den Hohlraum mündet, wobei die Verschlauchung die beiden Durchgänge (bspw. außen am Gehäuse) miteinander verbindet.

Gemäß einer Weiterbildung kann der Einleger mittels Blechumformen, Druckguss oder Fließpressen hergestellt sein. Somit ist der Einleger einfach und kostengünstig herstellbar.

Gemäß einer Weiterbildung kann der Einleger mittels Kleben (Einleger eingeklebt), Schweißen (Einleger eingeschweißt) und/oder Pressen (Einleger eingepresst) mit dem Antriebsgehäuse (dichtend) gefügt sein. Damit kann auf eine zusätzliche Dichtung ggf. verzichtet werden.

Gemäß einer Weiterbildung kann in den Bereichen, in denen der Einleger das Antriebsgehäuse kontaktiert, (jeweils) mindestens eine Dichtung angeordnet sein, um den Hohlraum gegenüber dem (Innenraum des) Antriebsgehäuse(s) abzudichten. Diese kann durch eine an den Einleger gespritzte Dichtung, bspw. eine Elastomer-Dichtung (äquivalent zu einem Radial-Wellendichtring (RWDR)) oder einen O-Ring realisiert werden.

Gemäß einer Weiterbildung kann der Einleger eine runde, insbesondere kreisförmige, scheibenartige Form mit einer runden, insbesondere kreisförmigen, Öffnung (in der Mitte) aufweisen. Der Einleger kann einen äußeren Randbereich und einen inneren Randbereich aufweisen. Der äußere Randbereich und/oder der innere Randbereich kann (dichtend) mit dem Antriebsgehäuse gefügt sein. Der äußere Randbereich kann bspw. mit einer inneren Umfangsfläche des Antriebsgehäuses in Kontakt sein. Der innere Randbereich kann bspw. mit einem Lagersitz oder Dichtsitz der Lagerwand in Kontakt sein.

Gemäß einer Weiterbildung können der Hohlraum und der Kühlkanal fluidisch parallel zueinander geschaltet sein. Die Parallelschaltung bezieht sich dabei auf einen Kühlmittelstrom bzw. einen Kühlmittelströmungskanal.

Gemäß einer Weiterbildung können der Hohlraum und der Kühlkanal fluidisch in Reihe geschaltet sein. Die Reihenschaltung bezieht sich dabei auf einen Kühlmittelstrom bzw. einen Kühlmittelströmungskanal.

Erfindungsgemäß wird ein Fahrzeug, insbesondere ein Kraftfahrzeug, mit einer eine elektrischen Antriebseinheit gemäß obiger Ausführungen vorgeschlagen. Hinsichtlich der damit erzielbaren Vorteile wird auf die diesbezüglichen Ausführungen zur elektrischen Antriebseinheit verwiesen. Zur weiteren Ausgestaltung des Fahrzeugs können die im Zusammenhang mit der elektrischen Antriebseinheit beschriebenen Maßnahmen dienen.

Nachfolgend wird eine Ausführungsform der Erfindung unter Bezugnahme auf die beiliegenden Zeichnungen erläutert. Es zeigen:
- Figur 1: eine perspektivische Ansicht einer elektrischen Antriebseinheit;
- Figur 2: eine perspektivische Ansicht eines Einlegers;
- Figur 3: einen Ausschnitt einer Schnittansicht eines Antriebsgehäuses und eines Getriebegehäuses;
- Figur 4: einen vergrößerten Ausschnitt einer Schnittansicht des Antriebsgehäuses und des Getriebegehäuses gemäß Fig. 3;
- Figur 5: eine zu Fig. 4 alternative Ausführung eines Kanals zwischen einem Kühlkanal des Antriebsgehäuses und eines Hohlraums;
- Figur 6: eine schematische Skizze einer fluidischen Parallelschaltung;
- Figur 7: eine schematische Skizze einer zu Fig. 6 alternativen fluidischen Parallelschaltung:
- Figur 8: eine schematische Skizze einer fluidischen Reihenschaltung und
- Figur 9: eine schematische Skizze einer zu Fig. 8 alternativen fluidischen Reihenschaltung.

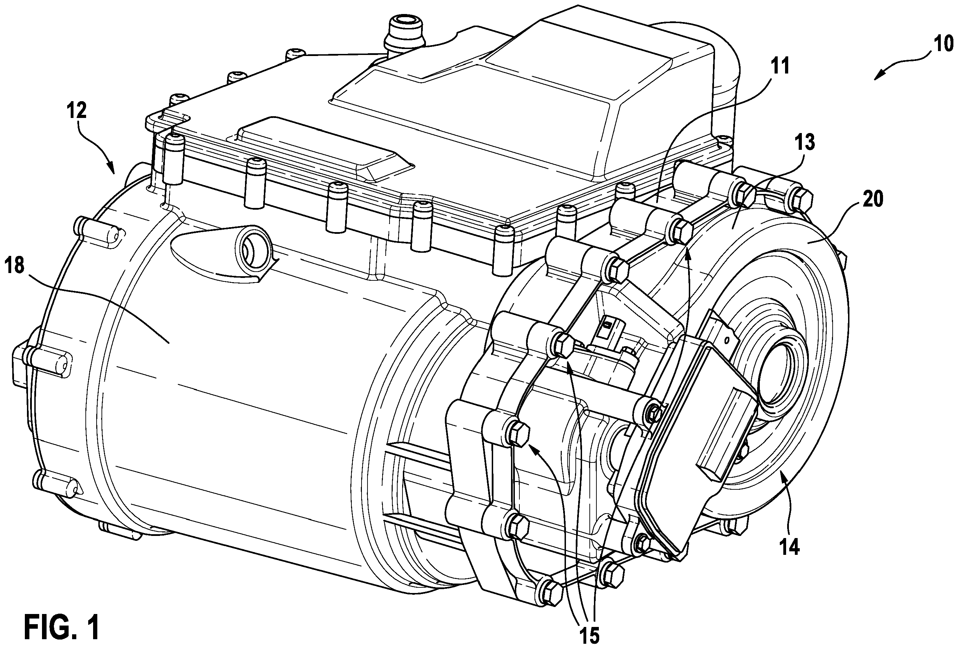

Die elektrische Antriebseinheit trägt in Figur 1 insgesamt das Bezugszeichen 10. Die elektrische Antriebseinheit 10 kann bspw. als E-Achse ausgebildet sein oder Bestandteil einer E-Achse bilden.

Die elektrische Antriebseinheit weist eine elektrische Maschine 12 und ein Getriebe 14 auf. Die elektrische Maschine 12 ist in einem Antriebsgehäuse 18 und das Getriebe 14 in einem Getriebegehäuse 20 untergebracht. Vorliegend ist das Getriebegehäuse 20 aus zwei Teilen ausgebildet. Der erste Teil 11 des Getriebegehäuses 20 ist einstückig mit dem Antriebsgehäuse 18 ausgebildet. Ein zweiter Teil 13 des Getriebegehäuses 20 ist mittels Verschraubungen 15 mit dem ersten Teil 11 des Getriebegehäuses 20 (dichtend) verbunden.

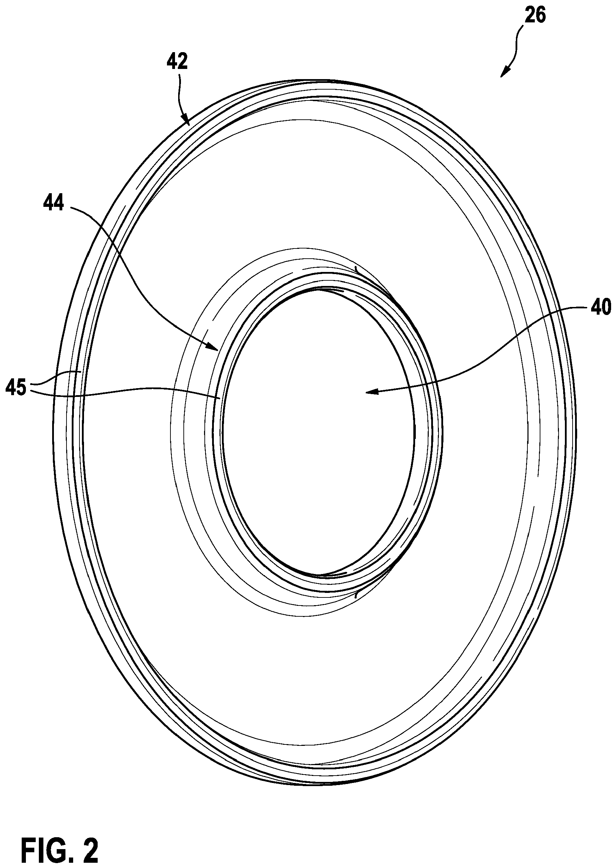

Figur 2 zeigt eine perspektivische Ansicht eines Einlegers 26. Der Einleger 26 kann mittels Blechumformen, Druckguss oder Fließpressen hergestellt werden.

Vorliegend weist der Einleger 26 eine kreisförmige, scheibenartige Form mit einer kreisförmigen, Öffnung 40 in der Mitte auf. Der Einleger 26 weist einen äußeren Randbereich 42 und einen inneren Randbereich 44 auf. Vorliegend weist der äußere Randbereich 42 und der innere Randbereich 44 beispielhaft jeweils eine Dichtung 45 auf. Die Dichtungen 45 sind umfänglich an dem inneren bzw. äußeren Randbereich 42, 44 angeordnet.

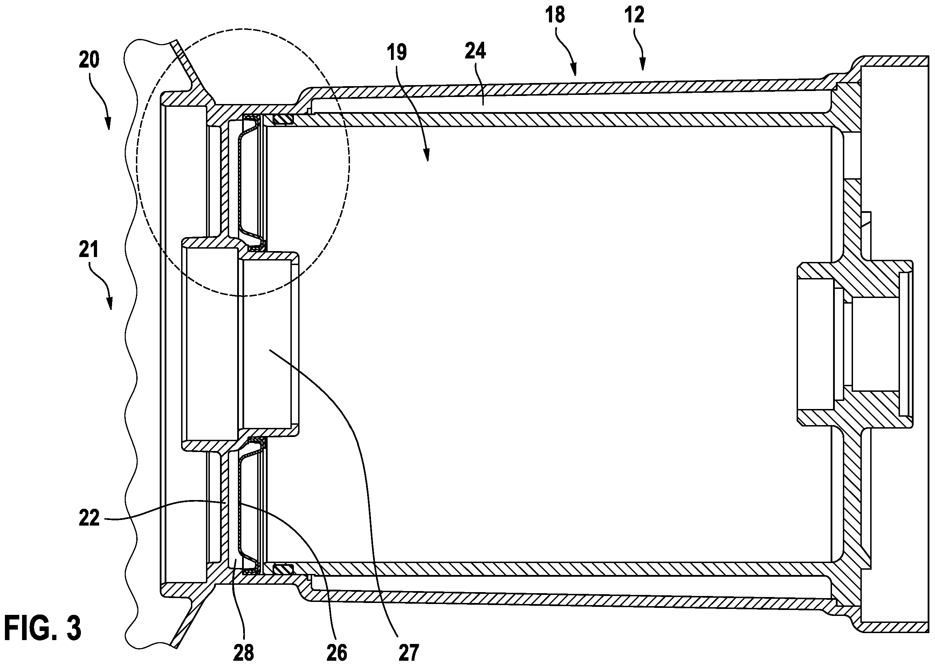

Figur 3 zeigt einen Ausschnitt einer Schnittansicht eines Antriebsgehäuses 18 und eines Getriebegehäuses 20. Es ist ein Innenraum 19 des Antriebsgehäuses 18 und teilweise ein Innenraum 21 des Getriebegehäuses 20 abgebildet. Die beiden Innenräume 19, 21 sind durch eine Lagerwand 22 voneinander getrennt. Innerhalb des Antriebsgehäuse 18 ist ein Kühlkanal 24 in Form eines Kühlmantels zur Kühlung der elektrischen Maschine 12 vorgesehen. An der Lagerwand 22 ist ein Lagersitz und/oder Dichtsitz 27 ausgebildet, um ein Wälzlager und/oder einen Dichtring, bspw. einen Radialwellendichtring aufzunehmen (nicht gezeigt).

Im Antriebsgehäuse 18 ist der Einleger 26 angeordnet. Dieser ist derart ausgestaltet und angeordnet, dass im Antriebsgehäuse 18 zwischen der Lagerwand 22 und dem Einleger 26 ein Hohlraum 28 entsteht. Der Hohlraum 28 ist fluidisch mit dem Kühlkanal 24 verbunden. In Figur 3 ist diese fluidische Verbindung aus Übersichtlichkeitsgründen nicht dargestellt.

Vorliegend ist der Einleger 26 derart ausgebildet, dass der Hohlraum 28 sich über die gesamte dem Antriebsgehäuse 18 zugewandte Fläche der Lagerwand 22 (radial außerhalb von Lagersitz und/oder Dichtsitz 27) erstreckt. Damit wird die gesamte Lagerwand 22 gekühlt.

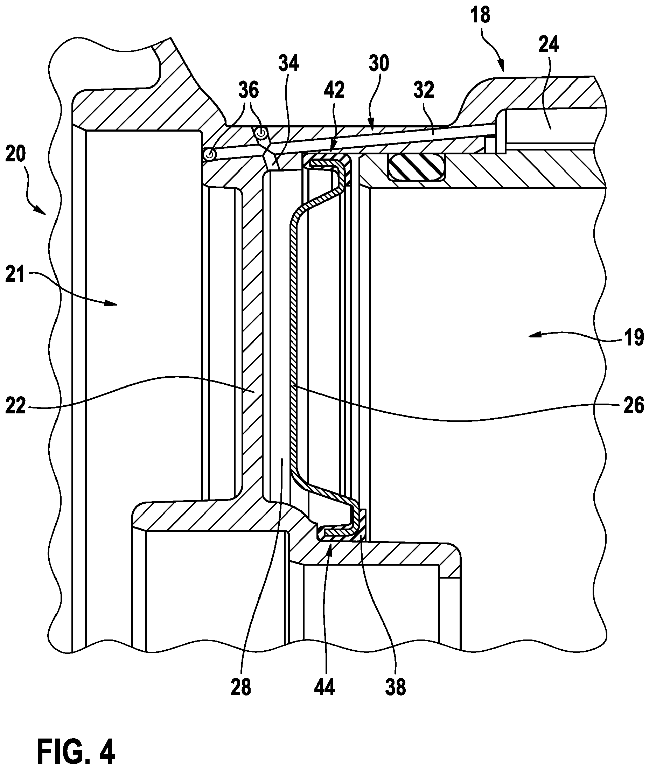

Figur 4 zeigt einen vergrößerten Ausschnitt einer Schnittansicht des Antriebsgehäuses 18 und des Getriebegehäuses 20 gemäß Fig. 3. Es ist der in Figur 3 durch eine gestrichelte Linie markierte Bereich vergrößert dargestellt.

Vorliegend ist der Hohlraum 28 mit dem Kühlkanal 24 mittels eines Kanals 30 fluidisch verbunden. Der Kanal 30 ist mittels zweier, sich kreuzender Durchgänge 32, 34 gebildet. Jeweils ein Ende eines Durchgangs 32,34 ist mittels eines Dichtstopfens 36 fluidisch dichtend versiegelt/verschlossen. Damit wird der Hohlraum 28 Teil des Kühlkreislaufs bzw. zu einem weiteren Kühlkanal, der die Lagerwand 22 kühlt. Die Durchgänge 32, 34 können auf einfache und kostengünstige Weise mittels Bohren/Fräsen hergestellt werden.

Vorliegend kontaktiert der Einleger 26 das Antriebsgehäuse 18 mit seinem äußeren Randbereich 42 und seinem inneren Randbereich 44. In den Bereichen, in denen der Einleger 26 das Antriebsgehäuse 18 kontaktiert, ist jeweils eine Dichtung 38 angeordnet, um den Hohlraum 28 gegenüber dem Innenraum des Antriebsgehäuses 18 abzudichten.

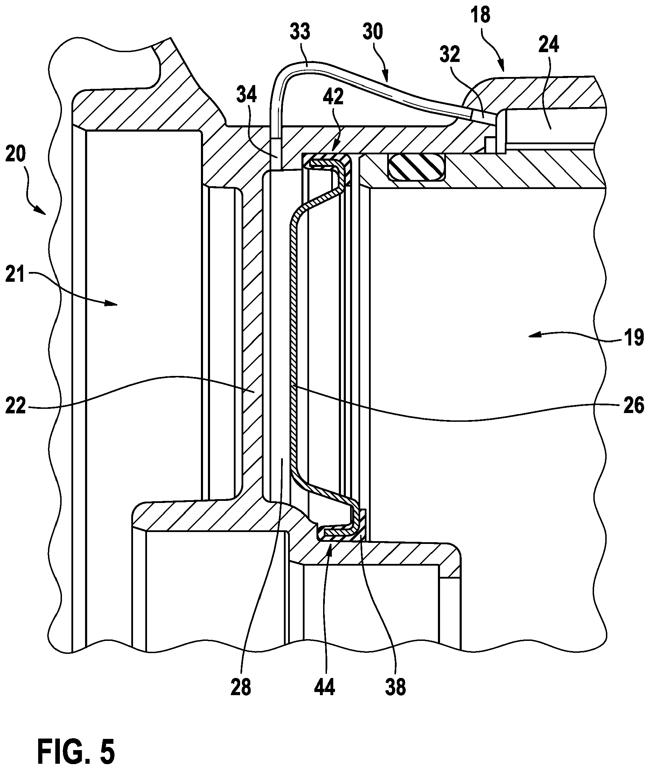

Figur 5 zeigt eine zu Fig. 4 alternative Ausführung des Kanals 30 zwischen dem Kühlkanal 24 des Antriebsgehäuses 18 und dem Hohlraum 28. Im Unterschied zu dem in Fig. 4 dargestellten Ausführungsbeispiel kreuzen sich die Durchgänge 32, 34 nicht. Kein Ende der Durchgänge 32, 34 ist mit einem Dichtstopfen 36 verschlossen. Der Durchgang 32 führt vom Kühlkanal 24 auf die Außenseite des Antriebsgehäuses 18. Der Durchgang 34 führt vom Hohlraum 28 ebenfalls auf die Außenseite des Antriebsgehäuses 18. Außerhalb des Antriebsgehäuses 18 ist eine Schlauchverbindung 33 vorgesehen, die die beiden Durchgänge 32, 34 und somit den Hohlraum 28 und den Kühlkanal 24 fluidisch miteinander verbindet.

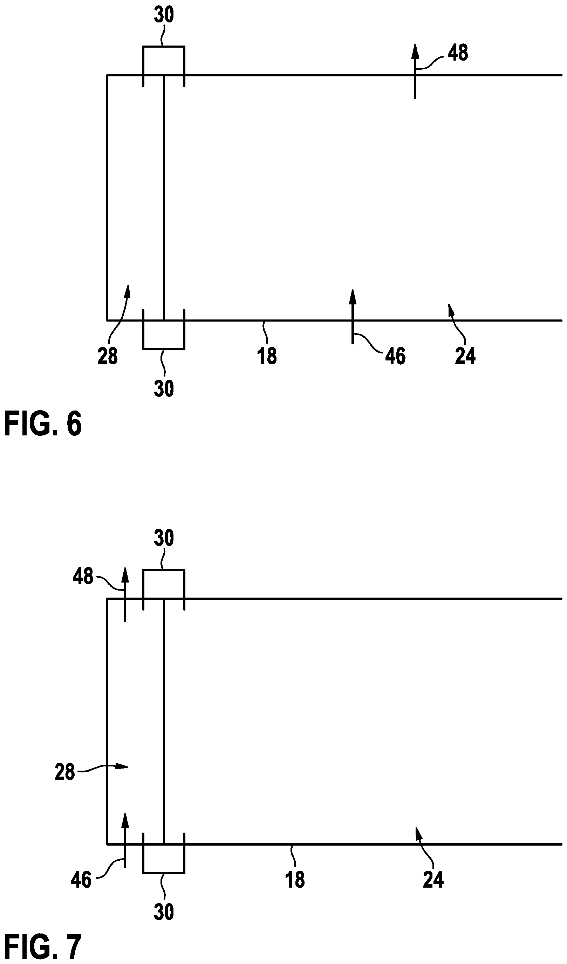

Figur 6 zeigt eine schematische Skizze einer fluidischen Parallelschaltung. Entsprechend sind die dargestellten Elemente lediglich schematisch angedeutet.

Dabei wird ein Kühlmittel durch eine Eingangsöffnung 46 in den Kühlmittelkanal 24 des Antriebsgehäuses 18 eingeleitet. Vorliegend ist der Kühlmittelkanal 24 als Kühlmantel ausgebildet. Der Kühlmittelkanal 24 ist über zwei Kanäle 30 mit dem Hohlraum 28 fluidisch verbunden (auch mehr als zwei Kanäle 30 denkbar). Damit gelangt das Kühlmittel aus dem Kühlmittelkanal 24 über die Kanäle 30 in den Hohlraum 28 und wieder aus dem Hohlraum 28 in den Kühlmittelkanal 24. Das durch die Eingangsöffnung 46 eingeleitete Kühlmittel umspült daher den Kühlmittelkanal 24 und den Hohlraum 28 bevor es an einer Ausgangsöffnung 48, die ebenfalls mit dem Kühlmittelkanal 24 fluidisch verbunden ist, ausgeleitet wird. Bevorzugt liegt die Eingangsöffnung 46 und die Ausgangsöffnung 48 jeweils an gegenüberliegenden Seiten des Antriebsgehäuses 18. Das Kühlmittel kann anteilig bspw. von der Eingangsöffnung 46 über den (in Fig.6 unteren) Kanal 30 und den (in Fig.6 oberen) Kanal 30 zur Ausgangsöffnung 48 geleitet werden.

Figur 7 zeigt eine schematische Skizze einer zu Fig. 6 alternativen fluidischen Parallelschaltung. Analog zur Fig. 6 sind die dargestellten Elemente lediglich schematisch angedeutet. Im Unterschied zu dem in Fig. 6 gezeigten Ausführungsbeispiel münden die Eingangsöffnung 46 und die Ausgangsöffnung 48 jeweils in den Hohlraum 28. Das durch die Eingangsöffnung 46 in den Hohlraum 28 eingeleitete Kühlmittel umspült dann ebenfalls den Hohlraum 28 und den Kühlmittelkanal 24 bevor es an der Ausgangsöffnung 48 ausgeleitet wird. Auch hier liegen die Eingangsöffnung 46 und die Ausgangsöffnung 48 bevorzugt jeweils an gegenüberliegenden Seiten des Antriebsgehäuses 18.

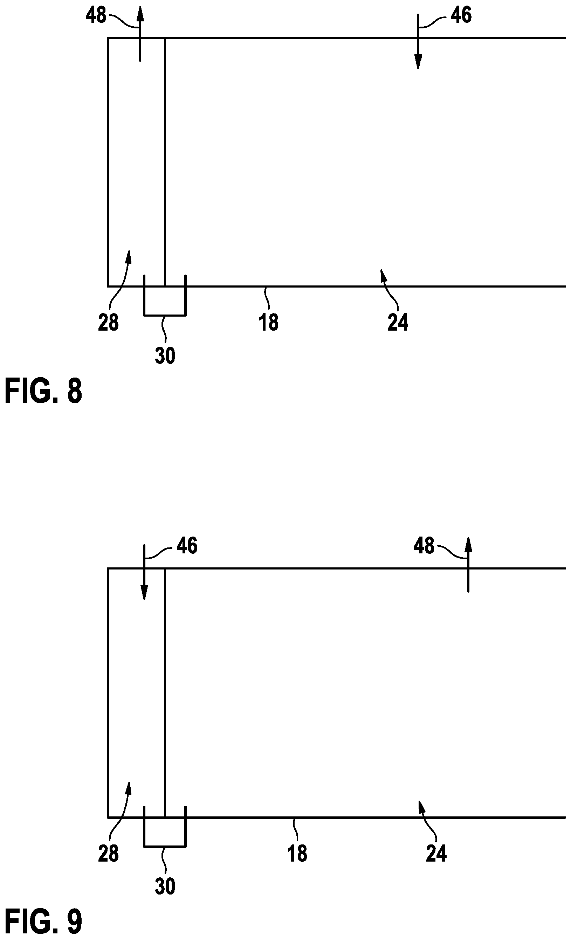

Figur 8 zeigt eine schematische Skizze einer fluidischen Reihenschaltung. Analog zur Fig. 6 bzw. Fig. 7 sind die dargestellten Elemente lediglich schematisch angedeutet. Dabei wird das Kühlmittel durch die Eingangsöffnung 46 in den Kühlmittelkanal 24 des Antriebsgehäuses 18 eingeleitet und aus der am Hohlraum 28 angeordneten Ausgangsöffnung 48 ausgeleitet. Analog zu den Figuren 6 und 7 ist der Kühlmittelkanal 24 als Kühlmantel ausgebildet. Der Kühlmittelkanal 24 ist über den Kanal 30 mit dem Hohlraum 28 fluidisch verbunden. Damit gelangt das Kühlmittel in den Kühlmittelkanal 24, umspült diesen, gelangt weiter über den Kanal 30 in den Hohlraum 28, umspült diesen, und wird aus dem Hohlraum 28 durch die Ausgangsöffnung 48 ausgeleitet.

Figur 9 zeigt eine schematische Skizze einer zu Fig. 8 alternativen fluidischen Reihenschaltung. Analog zu den Figuren 6 bis 8 sind die dargestellten Elemente lediglich schematisch angedeutet. Im Unterschied zu dem in Figur 8 gezeigten Ausführungsbeispiel ist die Eingangsöffnung 46 am Hohlraum 28 und die Ausgangsöffnung 48 am Kühlkanal 24 angeordnet. Damit wird das Kühlmittel durch die Eingangsöffnung 46 in den Hohlraum 28 eingeleitet. Der Hohlraum 28 ist über den Kanal 30 mit dem Kühlkanal 24 fluidisch verbunden. Analog zu den Figuren 6 bis 8 ist der Kühlmittelkanal 24 als Kühlmantel ausgebildet. Damit gelangt das Kühlmittel in den Hohlraum 28, umspült diesen, gelangt weiter über den Kanal 30 in den Kühlmittelkanal 24, umspült diesen, und wird aus dem Kühlmittelkanal 24 durch die Ausgangsöffnung 48 ausgeleitet.

Bevorzugt ist die Ausgangsöffnung 48 in den in den Figuren 6 bis 9 gezeigten Ausführungsbeispielen oben am Antriebsgehäuse 18 angeordnet, so dass das Kühlmittel die Ausgangsöffnung erst passiert, wenn aufgrund von Schwerkraft der gesamte Hohlraum 28 und/oder Kühlmittelkanal 24 durchspült wurde.

## Patentansprüche

1. Elektrische Antriebseinheit (10), insbesondere für ein Fahrzeug oder Kraftfahrzeug, mit einer elektrischen Maschine (12) und einem Getriebe (14), wobei die elektrische Maschine (12) in einem Antriebsgehäuse (18) untergebracht ist und das Getriebe (14) in einem Getriebegehäuse (20) untergebracht ist, wobei ein Innenraum (19) des Antriebsgehäuses (18) und ein Innenraum (21) des Getriebegehäuses (20) durch eine Lagerwand (22) voneinander getrennt sind, wobei am oder im Antriebsgehäuse (18) mindestens ein Kühlkanal (24) zur Kühlung der elektrischen Maschine (12) ausgebildet ist, **dadurch gekennzeichnet, dass** die elektrische Antriebseinheit (10) einen Einleger (26) aufweist, der derart ausgestaltet und angeordnet ist, dass im Antriebsgehäuse (18) zwischen der Lagerwand (22) und dem Einleger (26) ein Hohlraum (28) entsteht, wobei der Hohlraum (28) fluidisch mit dem Kühlkanal (24) verbunden ist.

2. Elektrische Antriebseinheit (10) nach Anspruch 1, **dadurch gekennzeichnet, dass** der Einleger (26) derart ausgebildet ist, dass der Hohlraum (28) sich über die gesamte dem Antriebsgehäuse (18) zugewandte Fläche der Lagerwand (22) erstreckt.

3. Elektrische Antriebseinheit (10) nach Anspruch 1 oder Anspruch 2, **dadurch gekennzeichnet, dass** der Hohlraum (28) mit dem Kühlkanal (24) mittels mindestens eines Kanals (30) fluidisch verbunden ist, vorzugsweise wobei der Kanal (30) mittels zweier, sich kreuzender Durchgänge (32, 34) gebildet ist, wobei jeweils ein Ende eines Durchgangs (32,34) mittels eines Dichtstopfens (36) fluidisch dichtend versiegelt/verschlossen ist.

4. Elektrische Antriebseinheit (10) nach einem der voranstehenden Ansprüche, **dadurch gekennzeichnet, dass** der Einleger (26) mittels Blechumformen, Druckguss oder Fließpressen hergestellt ist.

5. Elektrische Antriebseinheit (10) nach einem der voranstehenden Ansprüche, **dadurch gekennzeichnet, dass** der Einleger (26) mittels Kleben, Schweißen und/oder Pressen mit dem Antriebsgehäuse (18) gefügt ist.

6. Elektrische Antriebseinheit (10) nach einem der voranstehenden Ansprüche, **dadurch gekennzeichnet, dass** in den Bereichen, in denen der Einleger (26) das Antriebsgehäuse (18) kontaktiert, mindestens eine Dichtung (38) angeordnet ist, um den Hohlraum (28) gegenüber dem Antriebsgehäuse (18) abzudichten.

7. Elektrische Antriebseinheit (10) nach einem der voranstehenden Ansprüche, **dadurch gekennzeichnet, dass** der Einleger (26) eine runde, insbesondere kreisförmige, scheibenartige Form mit einer runden, insbesondere kreisförmigen, Öffnung (40) aufweist, wobei der Einleger (26) einen äußeren Randbereich (42) und einen inneren Randbereich (44) aufweist, wobei der äußere Randbereich (42) und/oder der innere Randbereich (44) mit dem Antriebsgehäuse (18) gefügt ist.

8. Elektrische Antriebseinheit (10) nach einem der voranstehenden Ansprüche, **dadurch gekennzeichnet, dass** der Hohlraum (28) und der Kühlkanal (24) fluidisch parallel zueinander geschaltet sind.

9. Elektrische Antriebseinheit (10) nach einem der Ansprüche 1 bis 7, **dadurch gekennzeichnet, dass** der Hohlraum (28) und der Kühlkanal (24) fluidisch in Reihe geschaltet sind.

10. Fahrzeug, insbesondere Kraftfahrzeug, mit einer elektrischen Antriebseinheit (10) nach einem der Ansprüche 1 bis 9.

## Claims

1. Electric drive unit (10), in particular for a vehicle or motor vehicle, having an electric machine (12) and a transmission (14), wherein the electric machine (12) is accommodated in a drive housing (18) and the transmission (14) is accommodated in a transmission housing (20), wherein an interior space (19) of the drive housing (18) and an interior space (21) of the transmission housing (20) are separated from one another by a bearing wall (22), wherein at least one cooling channel (24) for cooling the electric machine (12) is formed on or in the drive housing (18), **characterized in that** the electric drive unit (10) has an insert (26) which is designed and arranged in such a way that a cavity (28) is formed in the drive housing (18) between the bearing wall (22) and the insert (26), wherein the cavity (28) is connected fluidically to the cooling channel (24) .

2. Electric drive unit (10) according to Claim 1, **characterized in that** the insert (26) is designed in such a way that the cavity (28) extends over the entirety of that surface of the bearing wall (22) which faces towards the drive housing (18).

3. Electric drive unit (10) according to Claim 1 or Claim 2, **characterized in that** the cavity (28) is connected fluidically to the cooling channel (24) by means of at least one channel (30), preferably wherein the channel (30) is formed by means of two passages (32, 34) which cross one another, wherein in each case one end of a passage (32,34) is sealed/closed off in a fluidically sealing manner by means of a sealing plug (36) .

4. Electric drive unit (10) according to one of the preceding claims, **characterized in that** the insert (26) is produced by means of sheet-metal forming, die casting or extrusion.

5. Electric drive unit (10) according to one of the preceding claims, **characterized in that** the insert (26) is joined to the drive housing (18) by means of adhesive bonding, welding and/or pressing.

6. Electric drive unit (10) according to one of the preceding claims, **characterized in that**, in the regions in which the insert (26) is in contact with the drive housing (18), there is arranged at least one seal (38) for sealing off the cavity (28) with respect to the drive housing (18).

7. Electric drive unit (10) according to one of the preceding claims, **characterized in that** the insert (26) has a round, in particular circular, disc-like shape with a round, in particular circular, opening (40), wherein the insert (26) has an outer edge region (42) and an inner edge region (44), wherein the outer edge region (42) and/or the inner edge region (44) are/is joined to the drive housing (18).

8. Electric drive unit (10) according to one of the preceding claims, **characterized in that** the cavity (28) and the cooling channel (24) are connected in parallel with one another fluidically.

9. Electric drive unit (10) according to one of Claims 1 to 7, **characterized in that** the cavity (28) and the cooling channel (24) are connected in series fluidically.

10. Vehicle, in particular motor vehicle, having an electric drive unit (10) according to one of Claims 1 to 9.

## Revendications

1. Unité d'entraînement électrique (10), notamment pour un véhicule ou un véhicule automobile, avec une machine électrique (12) et une transmission (14), la machine électrique (12) étant logée dans un boîtier d'entraînement (18) et la transmission (14) étant logée dans un boîtier de transmission (20), un espace intérieur (19) du boîtier d'entraînement (18) et un espace intérieur (21) du boîtier de transmission (20) étant séparés l'un de l'autre par une paroi de palier (22), au moins un canal de refroidissement (24) étant réalisé sur ou dans le boîtier d'entraînement (18) pour refroidir la machine électrique (12), **caractérisée en ce que** l'unité d'entraînement électrique (10) présente un insert (26) qui est conçu et agencé de telle sorte qu'il se forme dans le boîtier d'entraînement (18) une cavité (28) entre la paroi de palier (22) et l'insert (26), la cavité (28) étant reliée fluidiquement au canal de refroidissement (24) .

2. Unité d'entraînement électrique (10) selon la revendication 1, **caractérisée en ce que** l'insert (26) est réalisé de telle sorte que la cavité (28) s'étend sur toute la surface de la paroi de palier (22) tournée vers le boîtier d'entraînement (18).

3. Unité d'entraînement électrique (10) selon la revendication 1 ou la revendication 2, **caractérisée en ce que** la cavité (28) est reliée fluidiquement au canal de refroidissement (24) au moyen d'au moins un canal (30), le canal (30) étant de préférence formé au moyen de deux passages (32, 34) qui se croisent, une extrémité de chaque passage (32, 34) étant scellée/fermée de manière étanche aux fluides au moyen d'un bouchon d'étanchéité (36).

4. Unité d'entraînement électrique (10) selon l'une quelconque des revendications précédentes, **caractérisée en ce que** l'insert (26) est fabriqué par formage de tôle, moulage sous pression ou extrusion.

5. Unité d'entraînement électrique (10) selon l'une quelconque des revendications précédentes, **caractérisée en ce que** l'insert (26) est assemblé au boîtier d'entraînement (18) par collage, soudage et/ou pressage.

6. Unité d'entraînement électrique (10) selon l'une quelconque des revendications précédentes, **caractérisée en ce que** dans les zones où l'insert (26) est en contact avec le boîtier d'entraînement (18), au moins un joint d'étanchéité (38) est agencé pour rendre étanche la cavité (28) par rapport au boîtier d'entraînement (18).

7. Unité d'entraînement électrique (10) selon l'une quelconque des revendications précédentes, **caractérisée en ce que** l'insert (26) présente une forme ronde, notamment circulaire, en forme de disque avec une ouverture ronde, notamment circulaire (40), l'insert (26) présentant une zone de bord extérieure (42) et une zone de bord intérieure (44), la zone de bord extérieure (42) et/ou la zone de bord intérieure (44) étant assemblées avec le boîtier d'entraînement (18).

8. Unité d'entraînement électrique (10) selon l'une quelconque des revendications précédentes, **caractérisée en ce que** la cavité (28) et le canal de refroidissement (24) sont connectés fluidiquement en parallèle.

9. Unité d'entraînement électrique (10) selon l'une quelconque des revendications 1 à 7, **caractérisée en ce que** la cavité (28) et le canal de refroidissement (24) sont connectés fluidiquement en série.

10. Véhicule, notamment véhicule automobile, avec une unité d'entraînement électrique (10) selon l'une quelconque des revendications 1 à 9.
